(19) Europäisches Patentamt
European Patent Office
Office européen des brevets

(11) **EP 3 572 930 B1**

(12) **EUROPEAN PATENT SPECIFICATION**

(45) Date of publication and mention
of the grant of the patent:
**08.09.2021 Bulletin 2021/36**

(51) Int Cl.:
***G06F 7/58*** *(2006.01)*

(21) Application number: **18741800.9**

(22) Date of filing: **12.01.2018**

(86) International application number:
**PCT/JP2018/001472**

(87) International publication number:
**WO 2018/135601 (26.07.2018 Gazette 2018/30)**

(54) **RANDOM NUMBER GENERATION DEVICE, METHOD, AND PROGRAM**

ZUFALLSZAHLENGENERATOR, VERFAHREN UND PROGRAMM

DISPOSITIF, PROCÉDÉ ET PROGRAMME DE GÉNÉRATION DE NOMBRE ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2017 JP 2017007827**

(43) Date of publication of application:
**27.11.2019 Bulletin 2019/48**

(73) Proprietor: **Nippon Telegraph and Telephone Corporation**
**Tokyo 100-8116 (JP)**

(72) Inventors:
• **OKADA Rina**
**Musashino-shi,**
**Tokyo 180-8585, (JP)**
• **HASEGAWA Satoshi**
**Musashino-shi,**
**Tokyo 180-8585, (JP)**
• **MASAKI Shogo**
**Musashino-shi,**
**Tokyo 180-8585, (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**WO-A1-2013/121736     JP-A- 2002 189 589**
**US-A1- 2003 101 031**

• **IVAN GAZEAU ET AL: "Preserving differential privacy under finite-precision semantics.", ELECTRONIC PROCEEDINGS IN THEORETICAL COMPUTER SCIENCE, vol. 117, 11 June 2013 (2013-06-11), pages 1-18, XP055727984, DOI: 10.4204/EPTCS.117.1**
• **CYNTHIA DWORK: "A firm foundation for private data analysis", COMMUNICATIONS OF THE ACM, vol. 54, no. 1, 1 January 2011 (2011-01-01), pages 86-95, XP055727958, United States ISSN: 0001-0782, DOI: 10.1145/1866739.1866758**

## Description

[TECHNICAL FIELD]

The present invention relates to a technique for generating random numbers.

[BACKGROUND ART]

Patent Literature 1 has been known as a noise addition method that has been conventionally used in anonymization, one of privacy protection techniques (for example, Non-patent literatures 1, 2, 3 4 and 5).

Patent literature 2 discloses a method for generating a sequence of random numbers approximated to sequences of numbers of a 1/f noise is based on utilizing (0,1)-normally-distributed random numbers to make possible the generation of an arbitrary-length sequence of random numbers representing a good approximation to random numbers of a 1/f noise while limiting the computation time for determining such sequences of random numbers.

Non-patent literature 6 relates to the concept of differential privacy, according to which privacy is protected by the addition of noise to a true (private) value, and analyzes results for implementations of this concept with finite-precision semantics.

Reference is also made to Non-patent literature 7.

A subject in the above patent literature is to generate random numbers according to an arbitrary probability distribution of an arbitrary dimension.

[PRIOR ART LITERATURE]

[PATENT LITERATURE]

Patent literature 1: Japanese Patent Application Laid-Open No. 2014-081545

Patent literature 2: US Patent Application Laid-Open No. 2003/101031

[NON-PATENT LITERATURE]

Non-patent literature 1: Dai Ikarashi, Koji Chida, Katsumi Takahashi, "Efficient Privacy-preserving Cross Tabulation for Multi-valued Attributes", Papers of Information Processing Society Symposium, Volume 2008, No. 8, 1st Volume, pp. 497-502, October 8, 2008

Non-patent literature 2: Dai Ikarashi, Koji Chida, Katsumi Takahashi, "A Probabilistic Extension of k-Anonimity", CSS2009, Volume 2009, pp. 1-6, October 2009

Non-patent literature 3: Dai Ikarashi, Koji Chida, Katsumi Takahashi, "Randomized k-Anonymization for Numeric Attributes", CSS2011, Volume 2011, No. 3, pp. 450-455, October 12, 2011

Non-patent literature 4: Dai Ikarashi, Satoshi Hasegawa, Tatsuya Osame, Ryo Kikuchi, Koji Chida, "A Privacy Preserving Cross-tabulation which Guarantees k-Anonymity by Randomization for Numeric Attributes", Volume 2012, No. 3, pp. 639-646, October 23, 2012

Non-patent literature 5: Ryo Kikuchi, Dai Igarashi, Koji Chida, Koki Hamada, "Data-Dependent Pk-Anonymization Method for Publishing Useful Anonymized Table", SCIS2013

Non-patent literature 6: Ivan Gazeau, Dale Miller, Catuscia Palamidessi, "Preserving Differential Privacy under Finite-Precision Semantics", ELECTRONIC PROCEEDINGS IN THEORETICAL COMPUTER SCIENCE, Volume 117, pp. 1-18, June 11, 2013

Non-patent literature 7: Cynthia Dwork, "A Firm Foundation for Private Data Analysis", COMMUNICATIONS OF THE ACM, Volume 54, No. 1, pp. 86-95, January 1, 2011

[SUMMARY OF THE INVENTION]

[PROBLEMS TO BE SOLVED BY THE INVENTION]

One of methods for protecting privacy of personal data in a database is anonymization.

In order to anonymize numerical attributes, an anonymization method of causing each attribute value to transition to another attribute value using a random number according to a probability distribution called Laplace distribution (Non-patent literatures 2, 3 and 4) may be used. As an example of numerical attribute personal data, an example of position information (latitude/longitude) about a person will be considered. Though there is almost no possibility that a person exists in an area of the sea other than routes, it may seem as if a person existed in the area due to anonymization.

In order to anonymize a discrete attribute called a category attribute, which is not a numerical attribute, an anonymization method of causing the discrete attribute value to transition to another attribute value with a probability p may be used (Non-patent literatures 1 and 5). As an example of the category attribute, purchase information about a person will be considered. Though there cannot be a person who purchases a movie ticket of a high school student price and an alcoholic drink, it may seem as if such a person that belongs to the category area existed due to anonymization.

A reason why such state transition of a numerical attribute and a category attribute occurs is that a random number included in the impossible area is generated.

In order to prevent such impossible state transition, it is necessary to generate random numbers according to a multidimensional probability distribution of an arbitrary dimension such that a probability in an impossible area is zero. A method for generating such random numbers, however, has not been proposed yet.

The present invention is intended to provide a random number generation apparatus, method and program for generating random numbers according to a multidimensional probability distribution such that a probability in a predetermined area is zero.

[MEANS TO SOLVE THE PROBLEMS]

The present invention proposes random number generation apparatus and anonymization methods having the features of the respective independent claims. Preferred embodiments are described in the dependent claims.

A random number generation apparatus according to an example that is useful for understanding the present invention comprises:

a first random number generating part generating a random number $u=(u_1,...,u_D)^T \in [-\infty,\infty]^D$;
a second random number generating part generating a random number $v \in [0,f'_{max}]$; and
a determining part determining whether $f'(x_1=u_1,...,x_D=u_D) \geq v$ or not, and, if $f'(x_1=u_1,...,x_D=u_D) \geq v$, adopting u as a random number according to $f'(x_1,...,x_D)$, wherein
D is a predetermined positive integer, for $i=1,...,D$, $[h_i]$ is a predetermined possible range for a random variable $x_i$, a hole $[h]$ is $[h]=([h_1],...,[h_D])^T$, H is a probability of a predetermined basic distribution function $f(x_1,...,x_D)$ in the hole $[h]$, $\alpha=1/(1-H)$, a corrected distribution function $f'(x_1,...,x_D)$ is defined by Expressions (1) and (2):
- [Formula 1]

$$f'(x_1,\cdots,x_D) = 0 \quad if \ x_1 \in [h_1] \wedge \cdots \wedge x_D \in [h_D] \qquad (1)$$

and $f'_{max}$ is a maximum value of $f'(x_1,...,x_D)$.

A random number generation apparatus according to another example that is useful for understanding the present invention comprises:

an arithmetic operation part obtaining $r=(r_1,...,r_D)^T$ in the end, by performing, for each of $i=1,...,D$, a process for generating a random number $u_i \in [0,1]$, obtaining a random number $r_i=F^{-1}(u_i)$ according to $f'(x_i)$ using the generated $u_i$, and $x_i=r_i$, wherein
D is a predetermined positive integer, for $i=1,...,D$, $[h_i]$ is a predetermined possible range for a random variable $x_i$, a hole $[h]$ is $[h]=([h_1],...,[h_D])^T$, H is a probability of a predetermined basic distribution function $f(x_1,...,x_D)$ in the hole $[h]$, $\alpha=1/(1-H)$, a corrected distribution function $f'(x_1,...,x_D)$ is defined by Expressions (1) and (2):
[Formula 2]

$$H = \int_{x_1 \in [h_1]} \cdots \int_{x_D \in [h_D]} f(x_1,\cdots,x_D) dx_1 \cdots dx_D$$

$$f'(x_1,\cdots,x_D) = 0 \quad if \ x_1 \in [h_1] \wedge \cdots \wedge x_D \in [h_D] \qquad (1)$$

$$f'(x_1, \cdots, x_D) = \alpha \cdot f(x_1, \cdots, x_D) \qquad otherwise \qquad (2)$$

$f'(x_i)$ is a peripheral distribution of $f(x_1,...,x_D)$ of $x_i$, $F(t_i)$ is a function defined by Expression (2'):
[Formula 3]

$$f'(x_i) = \int_{-\infty}^{\infty} \cdots \int_{-\infty}^{\infty} f'(x_1, \cdots, x_D) dx_1 \cdots dx_{i-1} dx_{i+1} \cdots dx_D$$

$$F(t_i) = \int_{-\infty}^{t_i} f'(x_i) dx_i \qquad (2')$$

and $F^{-1}(t_i)$ is an inverse function of $F(t_i)$.

[EFFECTS OF THE INVENTION]

It is possible to generate random numbers according to a multidimensional distribution such that a probability in a predetermined area is zero.

[BRIEF DESCRIPTION OF THE DRAWINGS]

Fig. 1 is a block diagram for illustrating an example of a random number generation apparatus of a first embodiment;
Fig. 2 is a flowchart for illustrating an example of a random number generation method of the first embodiment;
Fig. 3 is a diagram for illustrating a prior-art technique;
Fig. 4 is a block diagram for illustrating an example of a random number generation apparatus of a second embodiment;
Fig. 5 is a flowchart for illustrating an example of a random number generation method of the second embodiment;
Fig. 6 is a diagram for illustrating a specific example 1; and
Fig. 7 is a diagram for illustrating a specific example 2.

[DETAILED DESCRIPTION OF THE EMBODIMENTS]

Embodiments of the present invention will be described below with reference to drawings.
Hereinafter, a distribution function that generates random numbers included in an impossible area is called a basic distribution function $f(x_1,...,x_D)$, and a distribution function that does not generate random numbers included in an impossible area is called a corrected distribution function $f'(x_1,...,x_D)$, where, $\forall D \in N^+\backslash\{0\}$. In other words, D is a predetermined positive integer.
An impossible area of a random variable is called "a hole", and the area of the hole is given as a parameter, for example, as shown below.
A hole $[h]=([h_1],...,[h_D])^T$ is a hypercube in D-dimensional space, and each $[h_i]$ indicates a range $[si,ei]$ for a random variable $x_i$.
The present invention is to generate a random number $r \in R^D$ according to an arbitrary D-dimensional probability distribution function $f(x_1,...,x_D)$. Intuitively, the process of the present invention is to express the function $f(x_1,...,x_D)$ as D one-dimensional probability distribution functions, sequentially generate a random number $r_i \in R$ D times, and obtain $r=(r_1,...,r_D)^T$, a set of $r_i$, in the end.

[First embodiment]

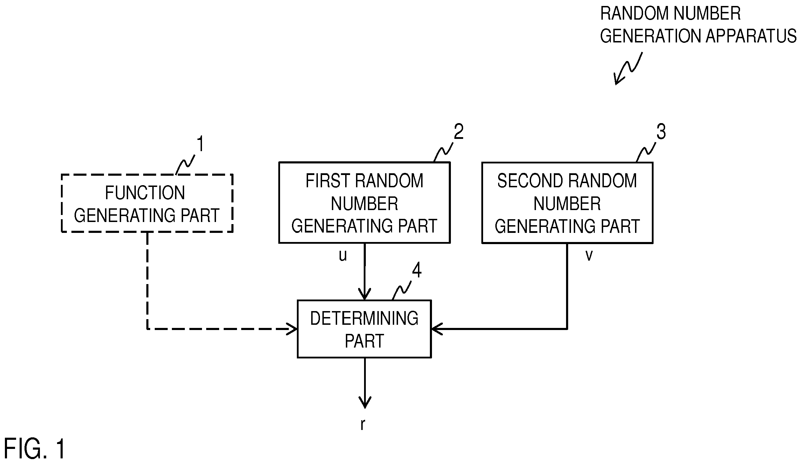

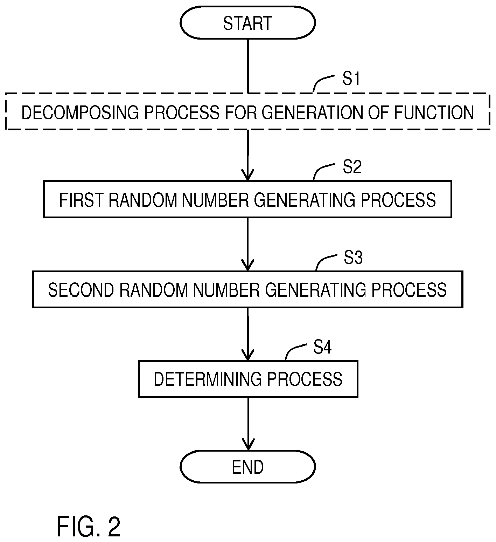

For example, a random number generation apparatus of a first embodiment is provided with a first random number generating part 2, a second random number generating part 3 and a determining part 4 as shown in Fig. 1. The random number generation apparatus may be further provided with a function generating part 1 indicated by a broken line in Fig. 1.
For example, a random number generation method of the first embodiment is realized by each part of the random number generation apparatus performing processes from step S2 to step S4 illustrated in Fig. 2 and described below.

Hereinafter, when the basic distribution function f is given, a procedure for generating a random number $r \in R^D$ of the first embodiment will be shown below. In this procedure, a technique of a rejection method is used. Hereinafter, a maximum value of the corrected distribution function f is indicated by fmax.

The random number generation apparatus outputs a D-dimensional random number $r=(r_1,...,r_D)^T$ with the basic distribution function f and the hole [h] as input.

A probability H of a basic distribution function $f(x_1, ..., x_D)$ in the hole [h] is defined as below.

[Formula 4]

$$H = \int_{x_1 \in [h_1]} \cdots \int_{x_D \in [h_D]} f(x_1, \cdots, x_D) dx_1 \cdots dx_D$$

When $\alpha=1/(1-H)$, a corrected distribution function $f'(x_1, ..., x_D)$ is defined by Expressions (1) and (2).
[Formula 5]

$$f'(x_1, \cdots, x_D) = 0 \quad if \ x_1 \in [h_1] \wedge \cdots \wedge x_D \in [h_D] \qquad (1)$$

$$f'(x_1, \cdots, x_D) = \alpha \cdot f(x_1, \cdots, x_D) \quad otherwise \qquad (2)$$

For example, the random number generation apparatus is provided with the function generating part 1 that calculates the probability H and the corrected distribution function $f'(x_1 ..., x_D)$, and the function generating part 1 calculates the probability H and the corrected distribution $f'(x_1 ..., x_D)$ in advance before subsequent processes are performed (step S1). The random number generation apparatus may not be provided with the function generating part 1. In this case, in subsequent processes, as the probability H and the corrected distribution function $f'(x_1 ..., x_D)$, the random number generation apparatus uses those calculated by another apparatus in advance.

The first random number generating part 2 generates a random number $u=(u_1,...,u_D)^T \in [-\infty,\infty]^D$ (step S2). The first random number generating part 2 generates, for example, a uniform random number $u=(u_1,...,u_D)^T \in [-\infty,\infty]^D$ as the random number u. The generated random number u is outputted to the determining part 4.

The second random number generating part 3 generates a random number $v \in [0,f'_{max}]$ (step S3). The second random number generating part 3 generates a uniform random number $v \in [0,f'_{max}]$ as the random number v. The generated random number v is outputted to the determining part 4.

The determining part 4 determines whether $f'(x_1=u_1,...,x_D=u_D) \geq v$ or not. If $f'(x_1=u_1,...,x_D=u_D) \geq v$, the determining part 4 adopts the u as a random number according to $f'(x_1,...,x_D)$ and outputs the random number u (step S4).

If $f'(x_1=u_1,... ,x_D=u_D) < v$, the determining part 4 causes the first random number generating part 2 and the second random number generating part 3 to perform the processes of steps S2 and S3, respectively, again. In other words, the determining part 4 causes the first random number generating part 2 and the second random number generating part 3 to perform the processes of steps S2 and S3, respectively, until $f'(x_1=u_1,...,x_D=u_D) \geq v$.

By the above processes, a multidimensional random number according to a multidimensional probability distribution such that a probability in the hole [h], which is a predetermined area, is zero can be generated. If an expression of a multidimensional probability distribution can be obtained, it is possible to generate random numbers not only from a multidimensional probability distribution such that a probability in an impossible area is zero but from an arbitrary probability distribution.

For example, by using this random number generation method, personal data that is impossible in a real society is not generated when anonymization of a database that includes personal data having a plurality of attributes is performed.

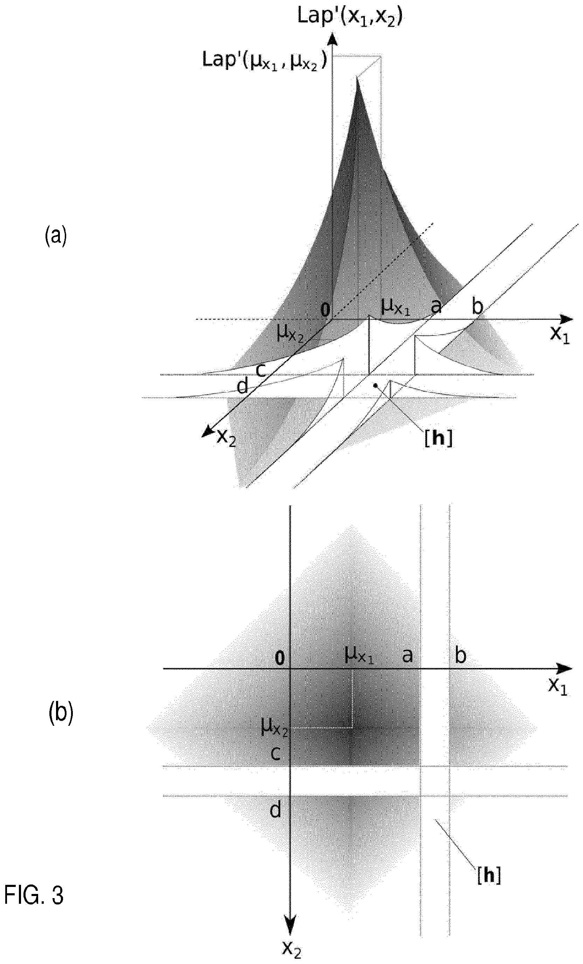

Attributes in a database to be anonymized are not necessarily independent but may be dependent on one another. In Non-patent literature 1, anonymization is applicable only when attributes in a database are independent and cannot be trivially extended to a multidimensional probability distribution such that there are attributes dependent on one another. Fig. 3 shows the above this. Fig. 3(a) is a perspective view, and Fig. 3(b) is a view from above. From Fig. 3, transition to a possible area is also prevented, which is different from what is to be achieved here. One of the points is to assume a simultaneous probability distribution and use a probability distribution having a hole from the simultaneous probability distribution to solve the above. Of course, this random number generation method is applicable to an arbitrary probability distribution and, therefore, can be used for privacy protection other than anonymization.

[Second embodiment]

A procedure for generating a random number $r \in R^D$ the processing speed of which is faster than that of the procedure of the first embodiment will be shown below. In this procedure, a technique of an inverse function method is used.

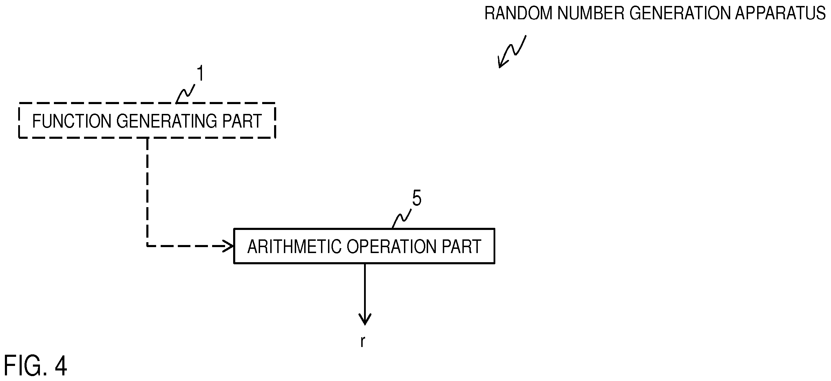

For example, a random number generation apparatus of the second embodiment is provided with an arithmetic operation part 5 as shown in Fig. 4. The random number generation apparatus may be further provided with a function generating part 1 indicated by a broken line in Fig. 4.

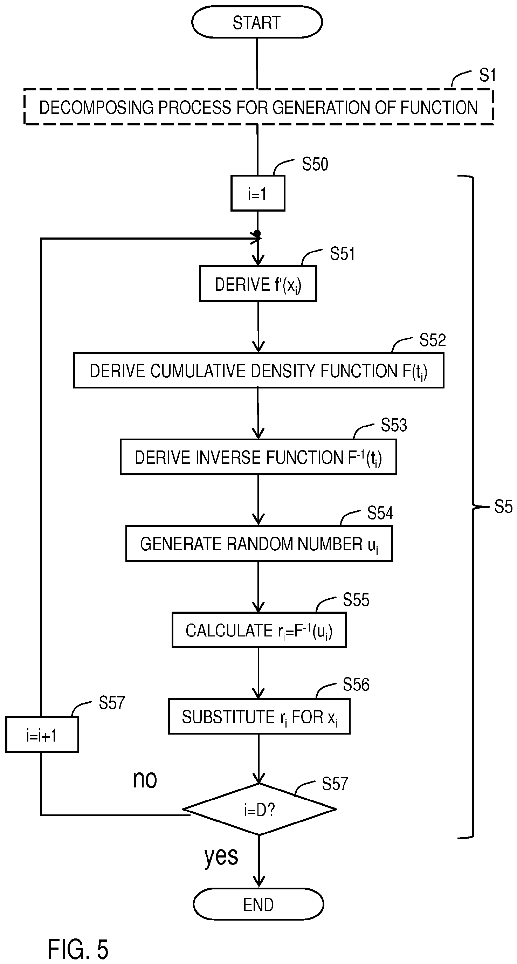

For example, a random number generation method of the second embodiment is realized by each part of the random number generation apparatus performing a process of step S5 illustrated in Fig. 5 and described below.

The random number generation apparatus outputs a D-dimensional random number $r=(r_1,...,r_D)^T$ with the basic distribution function f and the hole [h] as input.

A probability H of a basic distribution function $f(x_1, ..., x_D)$ in the hole [h] is defined as below.

[Formula 6]

$$H = \int_{x_1 \in [h_1]} \cdots \int_{x_D \in [h_D]} f(x_1, \cdots, x_D) dx_1 \cdots dx_D$$

When $\alpha = 1/(1-H)$, a corrected distribution function $f'(x_1, ..., x_D)$ is defined by Expressions (1) and (2).
[Formula 7]

$$f'(x_1, \cdots, x_D) = 0 \quad if \ x_1 \in [h_1] \wedge \cdots \wedge x_D \in [h_D] \qquad (1)$$

$$f'(x_1, \cdots, x_D) = \alpha \cdot f(x_1, \cdots, x_D) \quad otherwise \qquad (2)$$

For example, the random number generation apparatus is provided with the function generating part 1 that calculates the probability H and the corrected distribution function $f'(x_1 ..., x_D)$, and the function generating part 1 calculates the probability H and the corrected distribution $f'(x_1 ..., x_D)$ in advance before subsequent processes are performed (step S1). The random number generation apparatus may not be provided with the function generating part 1. In this case, in subsequent processes, as the probability H and the corrected distribution function $f'(x_1 ..., x_D)$, the random number generation apparatus uses those calculated by another apparatus in advance.

By performing, for each of i=1, ..., D, a process for generating a random number $u_i \in [0, 1]$, obtaining a random number $r_i = F^{-1}(u_i)$ according to $f'(x_i)$ using the generated $u_i$, and $x_i = r_i$, the arithmetic operation part 5 obtains $r=(r_1,...,r_D)^T$ in the end (step S5), wherein $f'(x_i)$ is a peripheral distribution of $f'(x_1,...,x_D)$ of $x_i$, $F(t_i)$ is a function defined by Expression (2')
[Formula 8]

$$f'(x_i) = \int_{-\infty}^{\infty} \cdots \int_{-\infty}^{\infty} f'(x_1, \cdots, x_D) dx_1 \cdots dx_{i-1} dx_{i+1} \cdots dx_D$$

$$F(t_i) = \int_{-\infty}^{t_i} f'(x_i) dx_i \qquad (2')$$

and $F^{-1}(t_i)$ is an inverse function of $F(t_i)$.

The arithmetic operation part 5 may perform processes from step S50 to step S57 below to perform step S5.

For example, first, for i=1 (step S50), the arithmetic operation part 5 derives a peripheral distribution $f'(x_1)$ of $f'(x_1,x_2,...,x_D)$ of $x_1$ (step S51).

[Formula 9]

$$f'(x_1) = \int_{-\infty}^{\infty} \cdots \int_{-\infty}^{\infty} f'(x_1, \cdots, x_D) dx_2 \cdots d_D$$

Then, the arithmetic operation part 5 derives a cumulative density function $F(t_1)$ (step S52).

[Formula 10]

$$F(t_1) = \int_{-\infty}^{t_1} f'(x_1) dx_1$$

Then, the arithmetic operation part 5 derives $F^{-1}(t_1)$ which is an inverse function of $F(t_1)$ (step S53).

Then, the arithmetic operation part 5 generates a random number $u_1 \in [0,1]$ (step S54). The arithmetic operation part 5 generates, for example, a uniform random number $u_1 \in [0,1]$ as the random number $u_1$.

Then, the arithmetic operation part 5 obtains a random number $r_1 = F^{-1}(u_1)$ according to $f'(x_1)$ using the generated $u_1$ (step S55). That is, the arithmetic operation part 5 calculates an output value in the case of inputting the generated $u_1$ to $F^{-1}(t_1)$ and sets the output value as $r_1$.

Then, the arithmetic operation part 5 substitutes $r_1$ for $x_1$ of $f'(x_1,...,x_D)$ to obtain $f'(x_2,...,x_D|x_1=r_1)$ (step S56).

Then, for integers $\forall i \in [2,D]$, the arithmetic operation part 5 performs an operation similar to steps S51 to S56 described above for $f'(x_i,...,x_D|x_1=r_1,...,x_{i-1}=r_{i-1})$ to obtain $r=(r_1,...,r_D)^T$ (step S57).

As described above, a multidimensional probability distribution may be converted to one-dimensional peripheral distributions to sequentially generate random numbers using an inverse function method.

It is possible to generate random numbers according to a multidimensional probability distribution such that a probability in the hole [h], which is a predetermined area, is zero by the second embodiment as like as the first embodiment though the procedure for generating random numbers of the second embodiment is different from that of the first embodiment.

[Specific example 1]

An example of the corrected distribution function f in the case of D=2 will be described below.

Where, N is a predetermined positive integer, and there are N predetermined possible ranges $[h_i]$ for the random variable $x_i$. The N predetermined possible ranges are $\{[h_i]\}_{i=1}^N = \{([h_1]_i, [h_2]_i)^T\}_{i=1}^N = \{([(s_1)_i, (e_1)_i], [(s_2)_i, (e_2)_i])^T\}_{i=i}^N$. As described above, the number of holes is to be N.

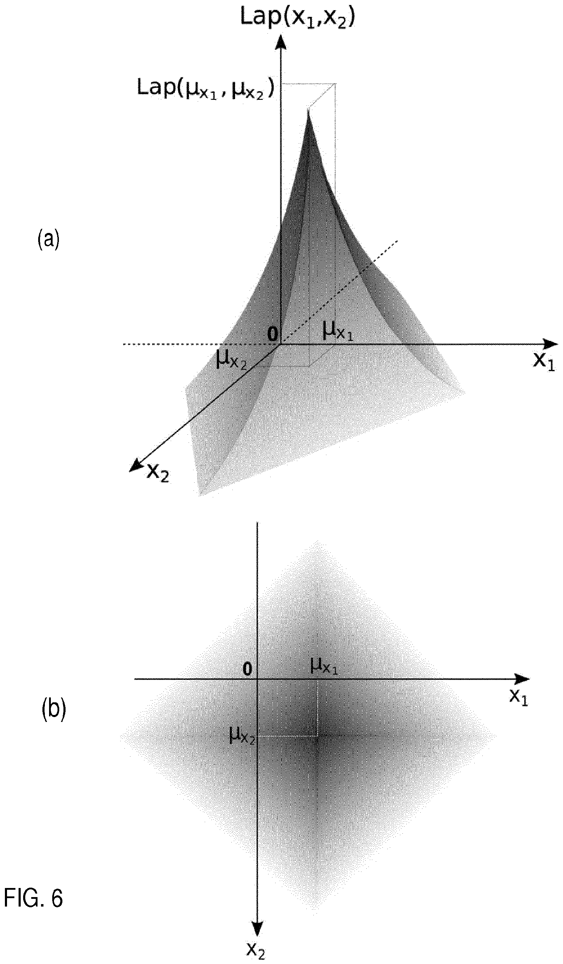

Further, $(\mu_{x1}, 2\sigma_{x1}^2)$ and $(\mu_{x2}, 2\sigma_{x2}^2)$ are predetermined parameters, and the basic distribution function $f(x1, ..., x_D)$ is Laplace distribution $Lap(x_1, x_2)$ defined by Expression (3). The Laplace distribution $Lap(x_1, x_2)$ is shown in Fig. 6. Fig. 6(a) is a perspective view, and Fig. 6(b) is a view from above.

[Formula 11]

$$Lap(x_1, x_2) = \frac{1}{2\sigma_{x_1}} \exp\left(-\frac{|x_1 - \mu_{x_1}|}{\sigma_{x_1}}\right) \frac{1}{2\sigma_{x_2}} \exp\left(-\frac{|x_2 - \mu_{x_2}|}{\sigma_{x_2}}\right) \qquad (3)$$

The sign(a) is a function that outputs a sign {+,-} of an input a, a function g(s,e) is defined by Expressions (5) and (6) when $s \le e$, and H is defined by Expression (4), then the corrected distribution function f' is $Lap'(x_1, x_2)$ defined by Expressions (7) and (8). [Formula 12]

$$H = \sum_{i=1}^{N} \left\{ \int_{[h_2]_i} \int_{[h_1]_i} Lap(x_1, x_2) dx_1 dx_2 \right\}$$

$$= \frac{1}{4} \sum_{i=0}^{N} \left\{ g\left((s_1)_i, (e_1)_i\right) g\left((s_2)_i, (e_2)_i\right) \right\} \qquad (4)$$

[Formula 13]

$$g(s,e) = 2 - \exp\left(\frac{s - \mu_{x_1}}{\sigma_{x_1}}\right) - \exp\left(\frac{-e + \mu_{x_1}}{\sigma_{x_1}}\right) \quad if \ s \le \mu_{x_1} \wedge \mu_{x_1} \le e \qquad (5)$$

$$g(s,e) = sign(e - \mu_{x_1}) \exp\left(-\frac{|e - \mu_{x_1}|}{\sigma_{x_1}}\right) - sign(s - \mu_{x_1}) \exp\left(-\frac{|s - \mu_{x_1}|}{\sigma_{x_1}}\right) \quad otherwise \qquad (6)$$

[Formula 14]

$$Lap'(x_1, x_2) = 0 \quad if \ x_1 \in [h_1]_i \wedge \cdots \wedge x_D \in [h_D]_i \Big|^{\exists i} \qquad (7)$$

$$Lap'(x_1, x_2) = \frac{\alpha}{4\sigma_{x_1}\sigma_{x_2}} \exp\left(-\frac{|x_1 - \mu_{x_1}|}{\sigma_{x_1}}\right) \exp\left(-\frac{|x_2 - \mu_{x_2}|}{\sigma_{x_2}}\right) \quad otherwise \qquad (8)$$

[Specific example 2]

Where, an example of the processes from step S50 to step S56 of the second embodiment will be described.

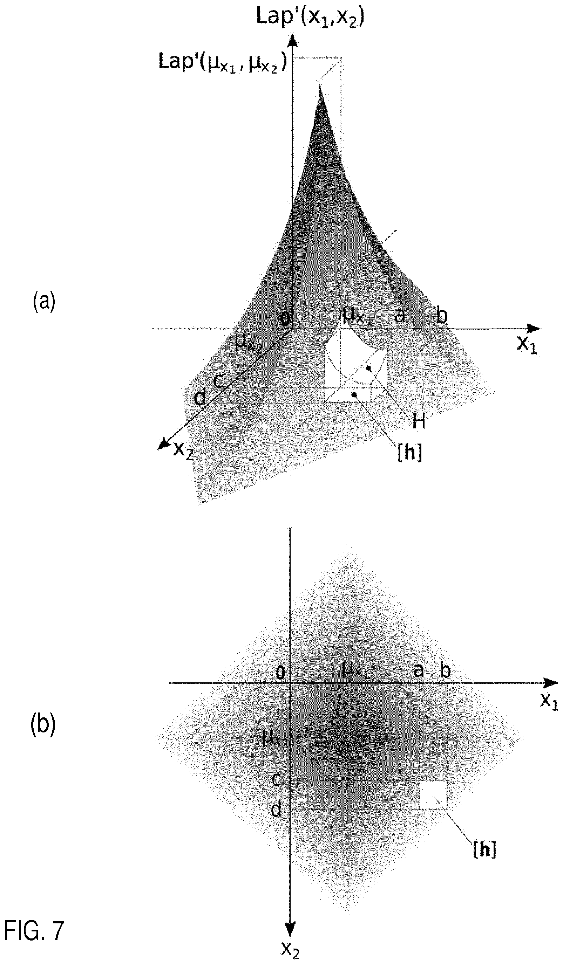

The corrected distribution function f is Lap'(x₁,x₂) with one hole [h] that is shown in Fig. 7. Fig. 7(a) is a perspective view, and Fig. 7(b) is a view from above. As shown in Fig. 7, in the specific example 2, the number of [h] is one, and [h]=([h₁],[h₂])=([(a),(b)],[(c),(d)]).

Where, a first area S₁ is (x₁≥μₓ₁)∧(x₂≥μₓ₂), a second area S₂ is (x₁≤μₓ₁)∧(x₂≥μₓ₂), a third area S₃ is (x₁≥μₓ₁)∧(x₂≤μₓ₂) and a fourth area S₄ is (x₁≤μₓ₁)∧(x₂≤μₓ₂).

First, a peripheral distribution of x₁ will be considered in order to obtain a random number r₁.

1. If the hole [h] is in the first area S₁ or the second area S₂, the corrected distribution function f is Lap'(x₁) defined by Expressions (9) and (10).
[Formula 15]

$$Lap'(x_1) = \frac{\alpha}{4\sigma_{x_1}} \exp\left(-\frac{|x_1 - \mu_{x_1}|}{\sigma_{x_1}}\right) \left(2 - \exp\left(\frac{-c + \mu_{x_2}}{\sigma_{x_2}}\right) + \exp\left(\frac{-d + \mu_{x_2}}{\sigma_{x_2}}\right)\right) \quad if \ a \le x_1 \le b \qquad (9)$$

$$Lap'(x_1) = \frac{\alpha}{2\sigma_{x_1}} \exp\left(-\frac{|x_1 - \mu_{x_1}|}{\sigma_{x_1}}\right) \quad otherwise \qquad (10)$$

2. If the hole [h] is in the third area S₃ or the fourth area S₄, the corrected distribution function f is Lap'(x₁) defined by Expressions (11) and (12).
[Formula 16]

$$Lap'(x_1) = \frac{\alpha}{4\sigma_{x_1}} \exp\left(-\frac{|x_1 - \mu_{x_1}|}{\sigma_{x_1}}\right)\left(2 + \exp\left(\frac{c - \mu_{x_2}}{\sigma_{x_2}}\right) - \exp\left(\frac{d - \mu_{x_2}}{\sigma_{x_2}}\right)\right) \quad if \ a \le x_1 \le b \qquad (11)$$

$$Lap'(x_1) = \frac{\alpha}{2\sigma_{x_1}} \exp\left(-\frac{|x_1 - \mu_{x_1}|}{\sigma_{x_1}}\right) \quad otherwise \qquad (12)$$

If a hole is across areas, the above cases 1. and 2. can be combined. Next, in order to generate a random number $r_1$, inverse functions shown by Expressions (13), (14), (15) and (16) are derived from the cumulative density function:

[Formula 17]

$$F(t_1) = Lap'(x_1 \le t_1) = \int_{-\infty}^{t_1} Lap'(x_1)dx_1$$

- Since inverse functions can be derived in other areas by using a similar procedure, description will be made here on only a case where there is a hole in the first area.

Hereinafter,

[Formula 18]

$$\beta = 2 - \exp\left(\frac{-c + \mu_{x_2}}{\sigma_{x_2}}\right) + \exp\left(\frac{-d + \mu_{x_2}}{\sigma_{x_2}}\right)$$

i) When $-\infty \le t_1 \le \mu_{x_1}$:
[Formula 19]

$$t_1 = \mu_{x_1} + \sigma_{x_1} \log\left(\frac{2}{\alpha}F(t_1)\right) \qquad (13)$$

ii) When $\mu_{x_1} \le t_1 \le a$:
[Formula 20]

$$t_1 = \mu_{x_1} - \sigma_{x_1} \log\left(2 - \frac{2}{\alpha}F(t_1)\right) \qquad (14)$$

iii) When $a \le t_1 \le b$:
[Formula 21]

$$t_1 = \mu_{x_1} - \sigma_{x_1} \log\left(\frac{2}{\beta}\left(2 - \frac{2}{\alpha}F(t_1) + \frac{\beta}{2}\exp\left(\frac{-a+\mu_{x_1}}{\sigma_{x_1}}\right) - \exp\left(\frac{-a+\mu_{x_1}}{\sigma_{x_1}}\right)\right)\right) \qquad (15)$$

iv) When b≤t₁:
[Formula 22]

$$t_1 = \mu_{x_1} - \sigma_{x_1} \log\left(2 - \frac{2}{\alpha}F(t_1) - \exp\left(\frac{-a+\mu_{x_1}}{\sigma_{x_1}}\right) + \frac{\beta}{2}\left(\exp\left(\frac{-a+\mu_{x_1}}{\sigma_{x_1}}\right) - \exp\left(\frac{-b+\mu_{x_1}}{\sigma_{x_1}}\right)\right) + \exp\left(\frac{-b+\mu_{x_1}}{\sigma_{x_1}}\right)\right) \qquad (16)$$

By substituting $u_1 \in [0,1]$ according to a uniform distribution $U_{[0,1]}$ for $F(t_1)$ of Expressions (13), (14), (15) and (16), the random number $r_1 = t_1$ according to Expressions (9) and (10) is generated. A probability density function $Lap'(x_2|x_1=r_1)$ in the case of $x_1=r_1$ is as follows:
[Formula 23]

$$Lap'(x_2|x_1 = r_1) = 0 \quad if \ a \le r_1 \le b \wedge c \le x_2 \le d \qquad (17)$$

$$Lap'(x_2|x_1 = r_1) = \frac{\alpha}{4\sigma_{x_1}\sigma_{x_2}}\exp\left(-\frac{|r_1 - \mu_{x_1}|}{\sigma_{x_1}}\right)\exp\left(-\frac{|x_2 - \mu_{x_2}|}{\sigma_{x_2}}\right) \quad otherwise \qquad (18)$$

Where, $\gamma$ is defined by the following expression:

[Formula 24]

$$\gamma = \exp\left(-\frac{|r_1 - \mu_{x_1}|}{\sigma_{x_1}}\right)$$

At this time, in order to generate a random number $r_2$, inverse functions shown in Expressions (19), (20) and (21) are derived from the cumulative density function:

[Formula 25]

$$F(t_2) = Lap'(x_2 \le t_2) = \int_{-\infty}^{t_2} Lap'(x_2)dx_2$$

i) When $-\infty \le t_2 \le \mu_{x_2}$:
[Formula 26]

$$t_2 = \mu_{x_2} + \sigma_{x_2}\log\left(\frac{4}{\alpha\gamma}F(t_2)\right) \qquad (19)$$

ii) When $\mu_{x_2} \le t_2 \le c$:
[Formula 27]

$$t_2 = \mu_{x_2} - \sigma_{x_2} \log\left(2 - \frac{4}{\alpha\gamma} F(t_2)\right) \qquad (20)$$

iii) When $c \leq t_2 \leq d$, $F(t_2)$ is determined regardless of $t_2$. Therefore, an inverse function does not exist. That is, random numbers within this range are not generated.

iv) When $d \leq t_2$:

[Formula 28]

$$t_2 = \mu_{x_2} - \sigma_{x_2} \log\left(\beta - \frac{4}{\alpha\gamma} F(t_2)\right) \qquad (21)$$

By substituting $u_2 \in [0,1]$ according to a uniform distribution $U_{[0,1]}$ for $F(t_2)$ of Expressions (19), (20) and (21), the random number $r_2 = t_2$ according to Expressions (17) and (18) is generated. In this way, $r = (r_1, r_2)^T$ is generated.

[Program and recording medium]

When each process of the random number generation apparatus is realized by a computer, processing content of functions that the random number generation apparatus should have is written by a program. By executing the program by computer, the processes of the random number generation apparatus are realized on the computer.

The program in which the processing content is written can be recorded to a computer-readable recording medium. As the computer-readable recording medium, any recording medium, for example, a magnetic recording device, an optical disk, magneto-optical recording medium or a semiconductor memory is possible.

Each processing part may be configured by causing a predetermined program to be executed on the computer, or at least a part of processing content of the processing part may be realized as hardware.

**Claims**

1.  A random number generation apparatus, comprising:

    a first random number generating part generating a random number $u = (u_1,...,u_D)^T \in [-\infty,\infty]^D$;

    a second random number generating part generating a random number $v \in [0, f'max]$;

    a determining part determining whether $f'(x_1 = u_1,...,x_D = u_D) \geq v$ or not, and, if $f'(x_1 = u_1,...,x_D = u_D) \geq v$, adopting u as a random number according to $f'(x_1,...,x_D)$; and

    an anonymization part anonymizing attributes in a database based on the adopted random number u, wherein D is a predetermined positive integer, for $i = 1,...,D$, $[h_i]$ is a predetermined possible range for a random variable $x_i$, a hole $[h]$ is $[h] = ([h_1],...,[h_D])^T$, H is a probability of a predetermined basic distribution function $f(x_1,...,x_D)$ in the hole $[h]$, $\alpha = 1/(1-H)$, a corrected distribution function $f'(x_1,...,x_D)$ is defined by Expressions (1) and (2):

    [Formula 29]

$$H = \int_{x_1 \in [h_1]} \cdots \int_{x_D \in [h_D]} f(x_1,\cdots,x_D) dx_1 \cdots dx_D$$

$$f'(x_1,\cdots,x_D) = 0 \quad if \ x_1 \in [h_1] \wedge \cdots \wedge x_D \in [h_D] \qquad (1)$$

$$f'(x_1,\cdots,x_D) = \alpha \cdot f(x_1,\cdots,x_D) \quad otherwise \qquad (2)$$

    and $f'_{max}$ is a maximum value of $f'(x_1,...,x_D)$.

2.  A random number generation apparatus comprising:

an arithmetic operation part obtaining $r=(r_1,...,r_D)^T$ in the end, by performing, for each of i=1,...,D, a process for generating a random number $u_i \in [0,1]$, obtaining a random number $r_i = F^{-1}(u_i)$ according to $f'(x_i)$ using the generated $u_i$, and $x_i = r_i$; and

an anonymization part anonymizing attributes in a database based on the adopted random number r, wherein D is a predetermined positive integer, for i=1,...,D, $[h_i]$ is a predetermined possible range for a random variable $x_i$, a hole [h] is $[h]=([h_1],...,[h_D])^T$, H is a probability of a predetermined basic distribution function $f(x_1,...,x_D)$ in the hole [h], $\alpha=1/(1-H)$, a corrected distribution function $f'(x_1,...,x_D)$ is defined by Expressions (1) and (2):
[Formula 30]

$$H = \int_{x_1 \in [h_1]} \cdots \int_{x_D \in [h_D]} f\left(x_1,\cdots,x_D\right) dx_1 \cdots dx_D$$

$$f'\left(x_1,\cdots,x_D\right) = 0 \quad if \ x_1 \in [h_1] \wedge \cdots \wedge x_D \in [h_D] \tag{1}$$

$$f'\left(x_1,\cdots,x_D\right) = \alpha \cdot f\left(x_1,\cdots,x_D\right) \quad otherwise \tag{2}$$

$f'(x_i)$ is a peripheral distribution of $f'(x_1,...,x_D)$ of $x_i$, $F(t_i)$ is a function defined by Expression (2'):
[Formula 31]

$$f'\left(x_i\right) = \int_{-\infty}^{\infty} \cdots \int_{-\infty}^{\infty} f'\left(x_1,\cdots,x_D\right) dx_1 \cdots dx_{i-1} dx_{i+1} \cdots dx_D$$

$$F\left(t_i\right) = \int_{-\infty}^{t_i} f'\left(x_i\right) dx_i \tag{2'}$$

and $F^{-1}(t_i)$ is an inverse function of $F(t_i)$.

3. The random number generation apparatus according to Claim 1 or 2, wherein
when D=2, N is a predetermined positive integer, there are N predetermined possible ranges $[h_i]$ for the random variable $x_i$, the N predetermined possible ranges are $\{[hi]\}_{i=1}^N=\{([h_1]_i,[h_2]_i)^T\}_{i=1}^N=\{([(s_1)_i,(e_1)_i],[(s_2)_i,(e_2)_i])^T\}_{i=1}^N$, $(\mu_{x1},2\sigma_{x1}^2),(\mu_{x2},2\sigma_{x2}^2)$ are predetermined parameters, the basic distribution function $f(x_1,...,x_D)$ is $Lap(x_1,x_2)$ defined by Expression (3), sign(a) is a function that outputs a sign {+,-} of an input a, a function g(s,e) is defined by Expressions (5) and (6) when s≤e, H described above is defined by Expression (4), and the corrected distribution function f' is $Lap'(x_1,x_2)$ defined by Expressions (7) and (8):
[Formula 32]

$$Lap\left(x_1,x_2\right) = \frac{1}{2\sigma_{x_1}} \exp\left(-\frac{\left|x_1 - \mu_{x_1}\right|}{\sigma_{x_1}}\right) \frac{1}{2\sigma_{x_2}} \exp\left(-\frac{\left|x_2 - \mu_{x_2}\right|}{\sigma_{x_2}}\right) \tag{3}$$

[Formula 33]

$$H = \sum_{i=1}^{N} \left\{ \int_{[h_2]_i} \int_{[h_1]_i} Lap\left(x_1,x_2\right) dx_1 dx_2 \right\}$$

$$= \frac{1}{4} \sum_{i=0}^{N} \left\{ g\left((s_1)_i,(e_1)_i\right) g\left((s_2)_i,(e_2)_i\right) \right\} \tag{4}$$

[Formula 34]

$$g(s,e) = 2 - \exp\left(\frac{s - \mu_{x_1}}{\sigma_{x_1}}\right) - \exp\left(\frac{-e + \mu_{x_1}}{\sigma_{x_1}}\right) \quad if \ \ s \le \mu_{x_1} \wedge \mu_{x_1} \le e \qquad (5)$$

$$g(s,e) = sign(e - \mu_{x_1})\exp\left(-\frac{|e - \mu_{x_1}|}{\sigma_{x_1}}\right) - sign(s - \mu_{x_1})\exp\left(-\frac{|s - \mu_{x_1}|}{\sigma_{x_1}}\right) \qquad otherwise \qquad (6)$$

[Formula 35]

$$Lap'(x_1, x_2) = 0 \quad if \ \ x_1 \in [h_1]_i \wedge \cdots \wedge x_D \in [h_D]_i \Big|^{\exists i} \qquad (7)$$

$$Lap'(x_1, x_2) = \frac{\alpha}{4\sigma_{x_1}\sigma_{x_2}}\exp\left(-\frac{|x_1 - \mu_{x_1}|}{\sigma_{x_1}}\right)\exp\left(-\frac{|x_2 - \mu_{x_2}|}{\sigma_{x_2}}\right) \qquad otherwise \qquad (8)$$

4.  The random number generation apparatus according to Claim 2, wherein
    when D=2, the predetermined possible range $[h_i]$ for the random variable $x_i$ is $[h_i] = ([h_1]_i, [h_2]_i)^T = ([a,b],[c,d])^T$,
    $(\mu_{x1}, 2\sigma_{x1}^2)$ and $(\mu_{x2}, 2\sigma_{x2}^2)$ are predetermined parameters, a first area $S_1$ is $(x_1 \ge \mu_{x1}) \wedge (x_2 \ge \mu_{x2})$, a second area $S_2$
    is $(x_1 \le \mu_{x1}) \wedge (x_2 \ge \mu_{x2})$, a third area $S_3$ is $(x_1 \ge \mu_{x1}) \wedge (x_2 \le \mu_{x2})$, and a fourth area $S_4$ is $(x_1 \le \mu_{x1}) \wedge (x_2 \le \mu_{x2})$, if the hole $[h]$
    is in the first area $S_1$ or the second area $S_2$, the corrected distribution function f' is $Lap'(x_1)$ defined by Expressions
    (9) and (10), and if the hole $[h]$ is in the third area $S_3$ or the fourth area $S_4$, the corrected distribution function f' is
    $Lap'(x_1)$ defined by Expressions (11) and (12):
    [Formula 36]

$$Lap'(x_1) = \frac{\alpha}{4\sigma_{x_1}}\exp\left(-\frac{|x_1 - \mu_{x_1}|}{\sigma_{x_1}}\right)\left(2 - \exp\left(\frac{-c + \mu_{x_2}}{\sigma_{x_2}}\right) + \exp\left(\frac{-d + \mu_{x_2}}{\sigma_{x_2}}\right)\right) \quad if \ \ a \le x_1 \le b \qquad (9)$$

$$Lap'(x_1) = \frac{\alpha}{2\sigma_{x_1}}\exp\left(-\frac{|x_1 - \mu_{x_1}|}{\sigma_{x_1}}\right) \qquad otherwise \qquad (10)$$

$$Lap'(x_1) = \frac{\alpha}{4\sigma_{x_1}}\exp\left(-\frac{|x_1 - \mu_{x_1}|}{\sigma_{x_1}}\right)\left(2 + \exp\left(\frac{c - \mu_{x_2}}{\sigma_{x_2}}\right) - \exp\left(\frac{d - \mu_{x_2}}{\sigma_{x_2}}\right)\right) \quad if \ \ a \le x_1 \le b \qquad (11)$$

$$Lap'(x_1) = \frac{\alpha}{2\sigma_{x_1}}\exp\left(-\frac{|x_1 - \mu_{x_1}|}{\sigma_{x_1}}\right) \qquad otherwise \qquad (12)$$

5.  An anonymization method comprising:

    a first random number generating step of a first random number generating part generating a random number
    $u = (u_1,...,u_D)^T \in [-\infty, \infty]^D$;
    a second random number generating step of a second random number generating part generating a random
    number $v \in [0, f'_{max}]$;
    a determining step of a determining part determining whether $f'(x_1 = u_1,...,x_D = u_D) \ge v$ or not, and, if
    $f'(x_1 = u_1,...,x_D = u_D) \ge v$, adopting u as a random number according to $f'(x_1,...,x_D)$; and
    an anonymization step of anonymizing attributes in a database based on the adopted random number u, wherein
    D is a predetermined positive integer, for i=1,...,D, $[h_i]$ is a predetermined possible range for a random variable

$x_i$, a hole [h] is $[h]=([h_1],...,[h_D])^T$, H is a probability of a predetermined basic distribution function $f(x_1,...,x_D)$ in the hole [h], $\alpha=1/(1-H)$, a corrected distribution function $f'(x_1,...,x_D)$ is defined by Expressions (1) and (2):
[Formula 37]

$$H = \int_{x_1 \in [h_1]} \cdots \int_{x_D \in [h_D]} f(x_1, \cdots, x_D) dx_1 \cdots dx_D$$

$$f'(x_1, \cdots, x_D) = 0 \quad if \ x_1 \in [h_1] \wedge \cdots \wedge x_D \in [h_D] \qquad (1)$$

$$f'(x_1, \cdots, x_D) = \alpha \cdot f(x_1, \cdots, x_D) \quad otherwise \qquad (2)$$

and $f'_{max}$ is a maximum value of $f'(x_1,...,x_D)$.

6. An anonymization method comprising:

an arithmetic operation step of an arithmetic operation part obtaining $r=(r_1,...,r_D)^T$ in the end, by performing, for each of i=1,...,D, a process for generating a random number $u_i \in [0,1]$, obtaining a random number $r_i = F^{-1}(u_i)$ according to $f'(x_i)$ using the generated $u_i$, and $x_i=r_i$; and
an anonymization step of anonymizing attributes in a database based on the adopted random number r, wherein D is a predetermined positive integer, for i=1,...,D, $[h_i]$ is a predetermined possible range for a random variable $x_i$, a hole [h] is $[h]=([h_1],...,[h_D])^T$, H is a probability of a predetermined basic distribution function $f(x_1,...,x_D)$ in the hole [h], $\alpha=1/(1-H)$, a corrected distribution function $f'(x_1,...,x_D)$ is defined by Expressions (1) and (2):
[Formula 38]

$$H = \int_{x_1 \in [h_1]} \cdots \int_{x_D \in [h_D]} f(x_1, \cdots, x_D) dx_1 \cdots dx_D$$

$$f'(x_1, \cdots, x_D) = 0 \quad if \ x_1 \in [h_1] \wedge \cdots \wedge x_D \in [h_D] \qquad (1)$$

$$f'(x_1, \cdots, x_D) = \alpha \cdot f(x_1, \cdots, x_D) \quad otherwise \qquad (2)$$

$f'(X_i)$ is a peripheral distribution of $f'(x_1,...,x_D)$ of $x_i$, $F(t_i)$ is a function defined by Expression (2'):
[Formula 39]

$$f'(x_i) = \int_{-\infty}^{\infty} \cdots \int_{-\infty}^{\infty} f'(x_1, \cdots, x_D) dx_1 \cdots dx_{i-1} dx_{i+1} \cdots dx_D$$

$$F(t_i) = \int_{-\infty}^{t_i} f'(x_i) dx_i \qquad (2')$$

and $F^{-1}(t_i)$ is an inverse function of $F(t_i)$.

7. A program for causing a computer to function as each part of the random number generation apparatus according to any of Claims 1 to 4.

**Patentansprüche**

1. Zufallszahl-Erzeugungsvorrichtung, umfassend:

einen eine erste Zufallszahl $u=(u_1,...,u_D)^T \in [-\infty,\infty]^D$ erzeugenden ersten Zufallszahl-Erzeugungsteil;
einen eine Zufallszahl $v \in [0,f'_{max}]$ erzeugenden zweiten Zufallszahl-Erzeugungsteil;
einen Bestimmungsteil, bestimmend, ob $f'(x_1=u_1,...,x_D=u_D) \geq v$ oder nicht, und, wenn $f'(x_1=u_1,...,x_D=u_D) \geq v$, u als

eine Zufallszahl entsprechend f'($x_1$,...,$x_D$) verwendend; und

einen Attribute in einer Datenbank auf der Basis der verwendeten Zufallszahl u anonymisierenden Anonymisierungsteil, wobei

D eine vorbestimmte positive Ganzzahl ist, für i=1,...,D, [$h_i$] ein vorbestimmter möglicher Bereich für eine Zufallsvariable $x_i$ ist, ein Loch [h] [h]=([$h_1$],....[$h_D$])$^T$ ist, H eine Wahrscheinlichkeit einer vorbestimmten Basisverteilungsfunktion f($x_1$,...,$x_D$) im Loch [h], $\alpha$=1/(1-H), ist, eine korrigierte Verteilungsfunktion f'($x_1$,...,$x_D$) durch Ausdruck (1) und (2) definiert ist:

[Formel 29]

$$H = \int_{x_1 \in [h_1]} \cdots \int_{x_D \in [h_D]} f\left(x_1, \cdots, x_D\right) dx_1 \cdots dx_D$$

$$f'\left(x_1, \cdots, x_D\right) = 0 \quad für \ x_1 \in \left[h_1\right] \wedge \cdots \wedge x_D \in \left[h_D\right] \qquad (1)$$

$$f'\left(x_1, \cdots, x_D\right) = \alpha \cdot f\left(x_1, \cdots, x_D\right) \ sonst \qquad (2)$$

und f'$_{max}$ ein Maximalwert von f'($x_1$,...,$x_D$) ist.

2. Zufallszahl-Erzeugungsvorrichtung, umfassend:

einen r=($r_1$,...,$r_D$)$^T$ am Ende durch Durchführen, für jeden von i=1,...,D, eines Prozesses zum Erzeugen einer Zufallszahl $u_i \in$[0,1] erhaltenden Rechenoperationsteil, erhaltend eine Zufallszahl $r_i$=$F^{-1}$($u_i$) gemäß f'($x_i$) unter Verwendung von erzeugtem $u_i$ und $x_i$=$r_i$; und

einen Attribute in einer Datenbank auf der Basis der verwendeten Zufallszahl r anonymisierenden Anonymisierungsteil, wobei

D eine vorbestimmte positive Ganzzahl ist, für i=1,...,D, [$h_i$] ein vorbestimmter möglicher Bereich für eine Zufallsvariable $x_i$ ist, ein Loch [h] [h]=([$h_1$],....[$h_D$])$^T$ ist, H eine Wahrscheinlichkeit einer vorbestimmten Basisverteilungsfunktion f($x_1$,...,$x_D$) im Loch [h], $\alpha$=1/(1-H), ist, eine korrigierte Verteilungsfunktion f'($x_1$,...,$x_D$) durch Ausdruck (1) und (2) definiert ist:

[Formel 30]

$$H = \int_{x_1 \in [h_1]} \cdots \int_{x_D \in [h_D]} f\left(x_1, \cdots, x_D\right) dx_1 \cdots dx_D$$

$$f'\left(x_1, \cdots, x_D\right) = 0 \quad für \ x_1 \in \left[h_1\right] \wedge \cdots \wedge x_D \in \left[h_D\right] \qquad (1)$$

$$f'\left(x_1, \cdots, x_D\right) = \alpha \cdot f\left(x_1, \cdots, x_D\right) \ sonst \qquad (2)$$

f'($x_i$) eine periphere Verteilung von f'($x_1$,...,$x_D$) von $x_i$ ist, F($t_i$) eine durch Ausdruck (2') definierte Funktion ist:

[Formel 31]

$$f'\left(x_i\right) = \int_{-\infty}^{\infty} \cdots \int_{-\infty}^{\infty} f'\left(x_1, \cdots, x_D\right) dx_1 \cdots dx_{i-1} dx_{i+1} \cdots dx_D$$

$$F\left(t_i\right) = \int_{-\infty}^{t_i} f'\left(x_i\right) dx_i \qquad (2')$$

und $F^{-1}$($t_i$) eine Umkehrfunktion von F($t_i$) ist.

3. Zufallszahl-Erzeugungsvorrichtung nach Anspruch 1 oder 2, wobei,

wenn D=2, N eine vorbestimmte positive Ganzzahl ist, es N vorbestimmte mögliche Bereiche [$h_i$] für die Zufallsvariable $x_i$ gibt, die N vorbestimmten möglichen Bereiche {[$h_i$]}$_{i=1}^N$={([$h_1$]$_i$,[$h_2$]$_i$)$^T$}$_{i=1}^N$={([($s_1$)$_i$,($e_1$)$_i$],[($s_2$)$_i$,($e_2$)$_i$])$^T$}$_{i=1}^N$ sind, ($\mu_{x1}$,2$\sigma_{x1}^2$),($\mu_{x2}$,2$\sigma_{x2}^2$) vorbestimmte Parameter sind, die Basisverteilfunktion f($x_1$,...,$x_D$) Lap($x_1$,$x_2$) definiert durch

Ausdruck (3) ist, sign(a) eine Funktion ist, die ein Vorzeichen {+,-} einer Eingabe a ist, eine Funktion g(s,e) durch Ausdruck (5) und (6) definiert ist, wenn s≤e, das zuvor beschriebene H durch Ausdruck (4) definiert ist und die korrigierte Verteilungsfunktion f' Lap'($x_1$,$x_2$) definiert durch Ausdruck (7) und (8) ist:

[Formel 32]

$$Lap(x_1, x_2) = \frac{1}{2\sigma_{x_1}} \exp\left( -\frac{|x_1 - \mu_{x_1}|}{\sigma_{x_1}} \right) \frac{1}{2\sigma_{x_2}} \exp\left( -\frac{|x_2 - \mu_{x_2}|}{\sigma_{x_2}} \right) \tag{3}$$

[Formel 33]

$$H = \sum_{i=1}^{N} \left\{ \int_{[h_2]_i} \int_{[h_1]_i} Lap(x_1, x_2) dx_1 dx_2 \right\}$$

$$= \frac{1}{4} \sum_{i=0}^{N} \left\{ g((s_1)_i, (e_1)_i) g((s_2)_i, (e_2)_i) \right\} \tag{4}$$

[Formel 34]

$$g(s,e) = 2 - \exp\left( \frac{s - \mu_{x_1}}{\sigma_{x_1}} \right) - \exp\left( \frac{-e + \mu_{x_1}}{\sigma_{x_1}} \right) \quad \textit{für } s \leq \mu_{x_1} \wedge \mu_{x_1} \leq e \tag{5}$$

$$g(s,e) = sign(e - \mu_{x_1}) \exp\left( -\frac{|e - \mu_{x_1}|}{\sigma_{x_1}} \right) - sign(s - \mu_{x_1}) \exp\left( -\frac{|s - \mu_{x_1}|}{\sigma_{x_1}} \right) \quad \textit{sonst} \tag{6}$$

[Formel 35]

$$Lap'(x_1, x_2) = 0 \quad \textit{für } x_1 \in [h_1]_i \wedge \cdots \wedge x_D \in [h_D]_i \Big|^{\exists_i} \tag{7}$$

$$Lap'(x_1, x_2) = \frac{\alpha}{4\sigma_{x_1}\sigma_{x_2}} \exp\left( -\frac{|x_1 - \mu_{x_1}|}{\sigma_{x_1}} \right) \exp\left( -\frac{|x_2 - \mu_{x_2}|}{\sigma_{x_2}} \right) \quad \textit{sonst} \tag{8}$$

4. Zufallszahl-Erzeugungsvorrichtung nach Anspruch 2, wobei, wenn D=2, der vorbestimmte mögliche Bereich $[h_i]$ für die Zufallsvariable $x_i$[$h_i$]=([$h_1$]$_i$,[$h_2$]$_i$)$^T$=([a,b],[c,d])$^T$ ist, ($\mu_{x1}$,$2\sigma_{x1}^2$) und ($\mu_{x2}$,$2\sigma_{x2}^2$) vorbestimmte Parameter sind, ein erster Bereich $S_1$ ($x_1 \geq \mu_{x1}$)∧($x_2 \geq \mu_{x2}$) ist, ein zweiter Bereich $S_2$ ($x_1 \leq \mu_{x1}$)∧($x_2 \geq \mu_{x2}$) ist, ein dritter Beriech $S_3$ ($x_1 \geq \mu_{x1}$)∧($x_2 \geq \mu_{x2}$) ist und ein vierter Bereich $S_4$ ($x_1 \leq \mu_{x1}$)∧($x_2 \leq \mu_{x2}$) ist, wenn sich das Loch [h] im ersten Bereich $S_1$ oder zweiten Bereich $S_2$ befindet, die korrigierte Verteilungsfunktion f' Lap'(xi) definiert durch Ausdruck (9) und (10) ist und, wenn sich das Loch [h] im dritten Bereich $S_3$ oder vierten Bereich $S_4$ befindet, die korrigierte Verteilungsfunktion f' Lap'(xi) definiert durch Ausdruck (11) und (12) ist:

[Formel 36]

$$Lap'(x_1) = \frac{\alpha}{4\sigma_{x_1}} \exp\left( -\frac{|x_1 - \mu_{x_1}|}{\sigma_{x_1}} \right) \left( 2 - \exp\left( \frac{-c + \mu_{x_2}}{\sigma_{x_2}} \right) + \exp\left( \frac{-d + \mu_{x_2}}{\sigma_{x_2}} \right) \right) \quad \textit{für } \leq x_1 \leq b \tag{9}$$

$$Lap'(x_1) = \frac{\alpha}{2\sigma_{x_1}} \exp\left(-\frac{|x_1 - \mu_{x_1}|}{\sigma_{x_1}}\right) \quad sonst \qquad (10)$$

$$Lap'(x_1) = \frac{\alpha}{4\sigma_{x_1}} \exp\left(-\frac{|x_1 - \mu_{x_1}|}{\sigma_{x_1}}\right)\left(2 + \exp\left(\frac{c - \mu_{x_2}}{\sigma_{x_2}}\right) - \exp\left(\frac{d - \mu_{x_2}}{\sigma_{x_2}}\right)\right) \quad f\ddot{u}r \; a \leq x_1 \leq b \qquad (11)$$

$$Lap'(x_1) = \frac{\alpha}{2\sigma_{x_1}} \exp\left(-\frac{|x_1 - \mu_{x_1}|}{\sigma_{x_1}}\right) \quad sonst \qquad (12)$$

**5.** Anonymisierungsverfahren, umfassend:

einen ersten Zufallszahl-Erzeugungsschritt eines eine Zufallszahl $u=(u_1,...,u_D)^T \in [-\infty,\infty]^D$ erzeugenden ersten Zufallszahl-Erzeugungsteils;
einen zweiten Zufallszahl-Erzeugungsschritt eines eine Zufallszahl $v \in [0,f'_{max}]$ erzeugenden zweiten Zufallszahl-Erzeugungsteils;
einen Bestimmungsschritt eines Bestimmungsteils, bestimmend, ob $f'(x_1=u_1,...,x_D=u_D) \geq v$ oder nicht, und, wenn $f'(x_1=u_1,...,x_D=u_D) \geq v$, u als eine Zufallszahl entsprechend $f'(x_1,...,x_D)$ verwendend; und
einen Anonymisierungsschritt zum Anonymisieren von Attributen in einer Datenbank auf der Basis der verwendeten Zufallszahl u, wobei
D eine vorbestimmte positive Ganzzahl ist, für i=1,...,D, $[h_i]$ ein vorbestimmter möglicher Bereich für eine Zufallsvariable $x_i$ ist, ein Loch [h] $[h]=([h_1],....,[h_D])^T$ ist, H eine Wahrscheinlichkeit einer vorbestimmten Basisverteilungsfunktion $f(x_1,...,x_D)$ im Loch [h], $\alpha=1/(1-H)$, ist, eine korrigierte Verteilungsfunktion $f'(x_1,...,x_D)$ durch Ausdruck (1) und (2) definiert ist:
[Formel 37]

$$H = \int_{x_1 \in [h_1]} \cdots \int_{x_D \in [h_D]} f(x_1,\cdots,x_D)dx_1 \cdots dx_D$$

$$f'(x_1,\cdots,x_D) = 0 \quad f\ddot{u}r \; x_1 \in [h_1] \wedge \cdots \wedge x_D \in [h_D] \qquad (1)$$

$$f'(x_1,\cdots,x_D) = \alpha \cdot f(x_1,\cdots,x_D) \quad sonst \qquad (2)$$

und $f'_{max}$ ein Maximalwert von $f'(x_1,...,x_D)$ ist.

**6.** Anonymisierungsverfahren, umfassend:

einen Rechenoperationsteil eines $r=(r_1,...,r_D)^T$ am Ende durch Durchführen, für jeden von i=1,...,D, eines Prozesses zum Erzeugen einer Zufallszahl $u_i \in [0,1]$ erhaltenden Rechenoperationsteils unter Erhalten einer Zufallszahl $r_i = F^{-1}(u_i)$ gemäß $f'(x_i)$ unter Verwendung von erzeugtem $u_i$ und $x_i = r_i$; und
einen Anonymisierungsschritt zum Anonymisieren von Attributen in einer Datenbank auf der Basis der verwendeten Zufallszahl r, wobei
D eine vorbestimmte positive Ganzzahl ist, für i=1,...,D, $[h_i]$ ein vorbestimmter möglicher Bereich für eine Zufallsvariable $x_i$ ist, ein Loch [h] $[h]=([h_1],...,[h_D])^T$ ist, H eine Wahrscheinlichkeit einer vorbestimmten Basisverteilungsfunktion $f(x_1,...,x_D)$ im Loch [h], $\alpha=1/(1-H)$, ist, eine korrigierte Verteilungsfunktion $f'(x_1,...,x_D)$ durch Ausdruck (1) und (2) definiert ist:
[Formel 38]

$$H = \int_{x_1 \in [h_1]} \cdots \int_{x_D \in [h_D]} f(x_1, \cdots, x_D) dx_1 \cdots dx_D$$

$$f'(x_1, \cdots, x_D) = 0 \quad \text{für } x_1 \in [h_1] \wedge \cdots \wedge x_D \in [h_D] \tag{1}$$

$$f'(x_1, \cdots, x_D) = \alpha \cdot f(x_1, \cdots, x_D) \quad \text{sonst} \tag{2}$$

$f'(x_i)$ eine periphere Verteilung von $f'(x_1,...,x_D)$ von $x_i$ ist, $F(t_i)$ eine durch Ausdruck (2') definierte Funktion ist:

[Formel 39]

$$f'(x_i) = \int_{-\infty}^{\infty} \cdots \int_{-\infty}^{\infty} f'(x_1, \cdots, x_D) dx_1 \cdots dx_{i-1} dx_{i+1} \cdots dx_D$$

$$F(t_i) = \int_{-\infty}^{t_i} f'(x_i) dx_i \tag{2'}$$

und $F^{-1}(t_i)$ eine Umkehrfunktion von $F(t_i)$ ist.

7. Programm zum Veranlassen eines Computers zur Funktion als jeder Teil der Zufallszahl-Erzeugungsvorrichtung nach einem der Ansprüche 1 bis 4.

**Revendications**

1. Appareil de génération de nombre aléatoire, comprenant :

une première partie de génération de nombre aléatoire, générant un nombre aléatoire $u=(u_1, ..., u_D)^T \in [-\infty,\infty]^D$ ;
une seconde partie de génération de nombre aléatoire, générant un nombre aléatoire $v \in [0, f'_{max}]$ ;
une partie de détermination déterminant si $f'(x_1=u_1,...,x_D=u_D) \geq v$ ou non, et, si $f'(x_1=u_1,...,x_D=u_D) \geq v$, adoptant u en tant que nombre aléatoire en fonction de $f'(x_1,...,x_D)$ ; et
une partie d'anonymisation anonymisant des attributs dans une base de données sur la base du nombre aléatoire adopté u, dans lequel :
D est un entier positif prédéterminé, pour i=1,...,D, $[h_i]$ est une plage possible prédéterminée pour une variable aléatoire $x_i$, un trou [h] est [h] = $([h_1],...,[h_D])^T$, H est la probabilité d'une fonction de distribution de base prédéterminée $f(x_1,...,x_D)$ dans le trou [h], $\alpha=1/(1-H)$, une fonction de distribution corrigée $f'(x_1,...,x_D)$ est définie par les expressions (1) et (2) :
[Formule 29]

$$H = \int_{x_1 \in [h_1]} \cdots \int_{x_D \in [h_D]} f(x_1, \cdots, x_D) dx_1 \cdots dx_D$$

$$f'(x_1, \cdots, x_D) = 0 \quad \text{si} \quad x_1 \in [h_1] \wedge \cdots \wedge x_D \in [h_D] \tag{1}$$

$$f'(x_1, \cdots, x_D) = \alpha \cdot f(x_1, \cdots, x_D) \quad \text{sinon} \tag{2}$$

et $f'_{max}$ est une valeur maximale de $f'(x_1,...,x_D)$.

2. Appareil de génération de nombre aléatoire, comprenant :

une partie d'opération arithmétique obtenant $r=(r_1,...,r_D)^T$ finalement, en exécutant, pour chaque i=1,...,D, un processus de génération d'un nombre aléatoire $u_i \in [0,1]$, obtenant un nombre aléatoire $r_i=F^{-1}(u_i)$ en fonction de $f'(x_i)$ à l'aide de $u_i$ généré, et $x_i=r_i$ ; et
une partie d'anonymisation anonymisant des attributs dans une base de données sur la base du nombre aléatoire adopté r, dans lequel :

D est un entier positif prédéterminé, pour i=1,...,D, $[h_i]$ est une plage possible prédéterminée pour une variable aléatoire $x_i$, un trou $[h]$ est $[h]=([h_1],...,[h_D])^T$, H est la probabilité d'une fonction de distribution de base $f(x_1,...,x_D)$ dans le trou $[h]$, $\alpha=1/(1-H)$, une fonction de distribution corrigée $f'(x_1,...,x_D)$ est définie par les expressions (1) et (2) :

[Formule 30]

$$H = \int_{x_1 \in [h_1]} \cdots \int_{x_D \in [h_D]} f(x_1,\cdots,x_D) dx_1 \cdots dx_D$$

$$f'(x_1,\cdots,x_D) = 0 \quad \texttt{si} \quad x_1 \in [h_1] \wedge \cdots \wedge x_D \in [h_D] \qquad (1)$$

$$f'(x_1,\cdots,x_D) = \alpha \cdot f(x_1,\cdots,x_D) \quad \texttt{sinon} \qquad (2)$$

$f'(x_i)$ est une distribution périphérique de $f'(x_1,...,x_D)$ de $x_i$, $F(t_i)$ est une fonction définie par l'expression (2') :

[Formule 31]

$$f'(x_i) = \int_{-\infty}^{\infty} \cdots \int_{-\infty}^{\infty} f'(x_1,\cdots,x_D) dx_1 \cdots dx_{i-1} dx_{i+1} \cdots dx_D$$

$$F(t_i) = \int_{-\infty}^{t_i} f'(x_i) dx_i \qquad (2')$$

et $F^{-1}(t_i)$ est une fonction inverse de $F(t_i)$.

3. Appareil de génération de nombre aléatoire, selon la revendication 1 ou 2, dans lequel :

lorsque D=2, N est un entier positif prédéterminé, il existe N plages possibles prédéterminées $[h_i]$ pour la variable aléatoire $x_i$, les N plages possibles prédéterminées sont $\{[h_i]\}_{i=1}^N = \{([h_1]_i, [h_2]_i)^T\}_{i=1}^N = \{(([(s_1)_i,(e_1)_i],[(s_2)_i,(e_2)_i])^T\}_i =_1^N$, $(\mu_{x1}, 2\sigma_{x1}^2)$, $(\mu_{x2}, 2\sigma_{x2}^2)$ sont des paramètres prédéterminés, la fonction de distribution de base $f(x_1,...,x_D)$ est $Lap(x_1,x_2)$ définie par l'expression (3), sign(a) est une fonction qui délivre un signe $\{+,-\}$ d'une entrée a, une fonction $g(s,e)$ est définie par les expressions (5) et (6) lorsque $s \leq e$, H décrite ci-dessus est définie par l'expression (4), et la fonction de distribution corrigée f' est $Lap'(x_1,x_2)$ définie par les expressions (7) et (8) :

[Formule 32]

$$Lap(x_1, x_2) = \frac{1}{2\sigma_{x_1}} \exp\left(-\frac{|x_1 - \mu_{x_1}|}{\sigma_{x_1}}\right) \frac{1}{2\sigma_{x_2}} \exp\left(-\frac{|x_2 - \mu_{x_2}|}{\sigma_{x_2}}\right) \qquad (3)$$

[Formule 33]

$$H = \sum_{i=1}^{N} \left\{ \int_{[h_2]_i} \int_{[h_1]_i} Lap(x_1, x_2) dx_1 dx_2 \right\}$$

$$= \frac{1}{4} \sum_{i=0}^{N} \{g((s_1)_i,(e_1)_i) g((s_2)_i,(e_2)_i)\} \qquad (4)$$

[Formule 34]

$$g(s,e) = 2 - \exp\left(\frac{s - \mu_{x_1}}{\sigma_{x_1}}\right) - \exp\left(\frac{-e + \mu_{x_1}}{\sigma_{x_1}}\right) \quad \text{si} \quad s \le \mu_{x_1} \wedge \mu_{x_1} \le e \qquad (5)$$

$$g(s,e) = sign\left(e - \mu_{x_1}\right)\exp\left(-\frac{|e - \mu_{x_1}|}{\sigma_{x_1}}\right) - sign\left(s - \mu_{x_1}\right)\exp\left(-\frac{|s - \mu_{x_1}|}{\sigma_{x_1}}\right) \qquad \text{sinon} \qquad (6)$$

[Formule 35]

$$Lap'(x_1, x_2) = 0 \quad \text{si} \quad x_1 \in [h_1]_i \wedge \cdots \wedge x_D \in [h_D]_i \Big|^{\exists_i} \qquad (7)$$

$$Lap'(x_1, x_2) = \frac{\alpha}{4\sigma_{x_1}\sigma_{x_2}}\exp\left(-\frac{|x_1 - \mu_{x_1}|}{\sigma_{x_1}}\right)\exp\left(-\frac{|x_2 - \mu_{x_2}|}{\sigma_{x_2}}\right) \qquad \text{sinon} \qquad (8)$$

**4.** Appareil de génération de nombre aléatoire, selon la revendication 2, dans lequel :
lorsque D=2, la plage possible prédéterminée $[h_i]$ pour la variable aléatoire $x_i$ est $[h_i] = ([h_1]_i, [h_2]_i)^T = ([a,b],[c,d])^T$, $(\mu_{x1}, 2\sigma_{x1}^2)$ et $(\mu_{x2}, 2\sigma_{x2}^2)$ sont des paramètres prédéterminés, une première zone $S_1$ est $(x_1 \ge \mu_{x1}) \wedge (x_2 \ge \mu_{x2})$, une deuxième zone $S_2$ est $(x_1 \le \mu_{x1}) \wedge (x_2 \ge \mu_{x2})$, une troisième zone $S_3$ est $(x_1 \ge \mu_{x1}) \wedge (x_2 \le \mu_{x2})$, et une quatrième zone $S_4$ est $(x_1 \le \mu_{x1}) \wedge (x_2 \le \mu_{x2})$, si le trou $[h]$ se trouve dans la première zone $S_1$ ou dans la deuxième zone $S_2$, la fonction de distribution corrigée f' est Lap'($x_1$) définie par les expressions (9) et (10), et si le trou $[h]$ se trouve dans la troisième zone $S_3$ ou dans la quatrième zone $S_4$, la fonction de distribution corrigée f' est Lap'($x_1$) définie par les expressions (11) et (12) :
[Formule 36]

$$Lap'(x_1) = \frac{\alpha}{4\sigma_{x_1}}\exp\left(-\frac{|x_1 - \mu_{x_1}|}{\sigma_{x_1}}\right)\left(2 - \exp\left(\frac{-c + \mu_{x_2}}{\sigma_{x_2}}\right) + \exp\left(\frac{-d + \mu_{x_2}}{\sigma_{x_2}}\right)\right) \quad \text{si} \quad a \le x_1 \le b \qquad (9)$$

$$Lap'(x_1) = \frac{\alpha}{2\sigma_{x_1}}\exp\left(-\frac{|x_1 - \mu_{x_1}|}{\sigma_{x_1}}\right) \qquad \text{sinon} \qquad (10)$$

$$Lap'(x_1) = \frac{\alpha}{4\sigma_{x_1}}\exp\left(-\frac{|x_1 - \mu_{x_1}|}{\sigma_{x_1}}\right)\left(2 + \exp\left(\frac{c - \mu_{x_2}}{\sigma_{x_2}}\right) - \exp\left(\frac{d - \mu_{x_2}}{\sigma_{x_2}}\right)\right) \quad \text{si} \quad a \le x_1 \le b \qquad (11)$$

$$Lap'(x_1) = \frac{\alpha}{2\sigma_{x_1}}\exp\left(-\frac{|x_1 - \mu_{x_1}|}{\sigma_{x_1}}\right) \qquad \text{sinon} \qquad (12)$$

**5.** Procédé d'anonymisation comprenant :

une première étape de génération de nombre aléatoire de première partie de génération de nombre aléatoire générant un nombre aléatoire $u=(u_1...,u_D)^T \in [-\infty,\infty]^D$;
une seconde étape de génération de nombre aléatoire de seconde partie de génération de nombre aléatoire générant un nombre aléatoire $v \in [0, f'_{max}]$ ;
une étape de détermination de partie de détermination déterminant si $f'(x_1=u_1,...,x_D=u_D) \ge v$ ou non, et, si $f'(x_1=u_1,...,x_D=u_D) \ge v$, adoptant u en tant que nombre aléatoire en fonction de $f'(x_1,...,x_D)$ ; et

une étape d'anonymisation consistant à anonymiser des attributs dans une base de données sur la base du nombre aléatoire adopté u, dans lequel :

D est un entier positif prédéterminé, pour i=1,...,D, [h$_i$] est une plage possible prédéterminée pour une variable aléatoire x$_i$, un trou [h] est [h]=([h$_1$],...,[h$_D$])$^T$, H est la probabilité d'une fonction de distribution de base prédéterminée f(x$_1$,...,x$_D$) dans le trou [h], α=1/(1-H), une fonction de distribution corrigée f'(x$_1$,...,x$_D$) est définie par les expressions (1) et (2) :

[Formule 37]

$$H = \int_{x_1 \in [h_1]} \cdots \int_{x_D \in [h_D]} f\left(x_1, \cdots, x_D\right) dx_1 \cdots dx_D$$

$$f'\left(x_1, \cdots, x_D\right) = 0 \quad \texttt{si} \quad x_1 \in [h_1] \wedge \cdots \wedge x_D \in [h_D] \tag{1}$$

$$f'\left(x_1, \cdots, x_D\right) = \alpha \cdot f\left(x_1, \cdots, x_D\right) \quad \texttt{sinon} \tag{2}$$

et f'$_{max}$ est une valeur maximale de f'(x$_1$,...,x$_D$).

6. Procédé d'anonymisation comprenant :

une étape d'opération arithmétique de partie d'opération arithmétique obtenant r=(r$_1$,...,r$_D$)$^T$ finalement, en exécutant, pour chaque i=1,...,D, un processus de génération d'un nombre aléatoire u$_i \in$[0,1], obtenant un nombre aléatoire r$_i$=F$^{-1}$(u$_i$) en fonction de f'(x$_i$) à l'aide de u$_i$ généré, et x$_i$=r$_i$ ; et

une étape d'anonymisation consistant à anonymiser des attributs dans une base de données sur la base du nombre aléatoire adopté r, dans lequel :

D est un entier positif prédéterminé, pour i=1,...,D, [h$_i$] est une plage possible prédéterminée pour une variable aléatoire x$_i$, un trou [h] est [h]=([h$_i$],...,[h$_D$])$^T$, H est la probabilité d'une fonction de distribution de base prédéterminée f(x$_1$,...,x$_D$) dans le trou [h], α=1/(1-H), une fonction de distribution corrigée f'(x$_1$,...,x$_D$) est définie par les expressions (1) et (2) :

[Formule 38]

$$H = \int_{x_1 \in [h_1]} \cdots \int_{x_D \in [h_D]} f\left(x_1, \cdots, x_D\right) dx_1 \cdots dx_D$$

$$f'\left(x_1, \cdots, x_D\right) = 0 \quad \texttt{si} \quad x_1 \in [h_1] \wedge \cdots \wedge x_D \in [h_D] \tag{1}$$

$$f'\left(x_1, \cdots, x_D\right) = \alpha \cdot f\left(x_1, \cdots, x_D\right) \quad \texttt{sinon} \tag{2}$$

f'(x$_i$) est une distribution périphérique de f'(x$_i$,...,x$_D$) de x$_i$, F(t$_i$) est une fonction définie par l'expression (2') :

[Formule 39]

$$f'\left(x_i\right) = \int_{-\infty}^{\infty} \cdots \int_{-\infty}^{\infty} f'\left(x_1, \cdots, x_D\right) dx_1 \cdots dx_{i-1} dx_{i+1} \cdots dx_D$$

$$F\left(t_i\right) = \int_{-\infty}^{t_i} f'\left(x_i\right) dx_i \tag{2'}$$

et F$^{-1}$(t$_i$) est une fonction inverse de F(t$_i$).

7. Programme permettant de faire fonctionner un ordinateur comme chaque partie de l'appareil de génération de nombre aléatoire selon l'une quelconque des revendications 1 à 4.

RANDOM NUMBER GENERATION APPARATUS

1 FUNCTION GENERATING PART

2 FIRST RANDOM NUMBER GENERATING PART

3 SECOND RANDOM NUMBER GENERATING PART

4 DETERMINING PART

u

v

r

FIG. 1

```
                          ┌─────────────┐
                          │    START    │
                          └─────────────┘
                                 │
                                 │            ⌐ S1
     ┌ ─ ─ ─ ─ ─ ─ ─ ─ ─ ─ ─ ─ ─▼─ ─ ─ ─ ─ ─ ─ ─ ─ ─ ─ ─ ┐
     │  DECOMPOSING PROCESS FOR GENERATION OF FUNCTION   │
     └ ─ ─ ─ ─ ─ ─ ─ ─ ─ ─ ─ ─ ─ ─ ─ ─ ─ ─ ─ ─ ─ ─ ─ ─ ─ ┘
                                 │
                                 │            ⌐ S2
              ┌──────────────────▼──────────────────┐
              │  FIRST RANDOM NUMBER GENERATING PROCESS │
              └─────────────────────────────────────┘
                                 │
                                 │            ⌐ S3
              ┌──────────────────▼──────────────────┐
              │  SECOND RANDOM NUMBER GENERATING PROCESS │
              └─────────────────────────────────────┘
                                 │
                                 │            ⌐ S4
              ┌──────────────────▼──────────────────┐
              │         DETERMINING PROCESS         │
              └─────────────────────────────────────┘
                                 │
                                 ▼
                          ┌─────────────┐
                          │     END     │
                          └─────────────┘
```

FIG. 2

FIG. 3

RANDOM NUMBER GENERATION APPARATUS

1

FUNCTION GENERATING PART

5

ARITHMETIC OPERATION PART

r

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014081545 A

- US 2003101031 A

### Non-patent literature cited in the description

- **DAI IKARASHI ; KOJI CHIDA ; KATSUMI TAKAHASHI.** Efficient Privacy-preserving Cross Tabulation for Multi-valued Attributes. *Papers of Information Processing Society Symposium,* 08 October 2008, vol. 2008 (8), 497-502
- **DAI IKARASHI ; KOJI CHIDA ; KATSUMI TAKAHASHI.** A Probabilistic Extension of k-Anonimity. *CSS2009,* October 2009, vol. 2009, 1-6
- **DAI IKARASHI ; KOJI CHIDA ; KATSUMI TAKAHASHI.** Randomized k-Anonymization for Numeric Attributes. *CSS2011,* 12 October 2011, vol. 2011 (3), 450-455
- **DAI IKARASHI ; SATOSHI HASEGAWA ; TATSUYA OSAME ; RYO KIKUCHI ; KOJI CHIDA.** *A Privacy Preserving Cross-tabulation which Guarantees k-Anonymity by Randomization for Numeric Attributes,* 23 October 2012, vol. 2012 (3), 639-646

- **RYO KIKUCHI ; DAI IGARASHI ; KOJI CHIDA ; KOKI HAMADA.** Data-Dependent Pk-Anonymization Method for Publishing Useful Anonymized Table. *SCIS2013*
- **IVAN GAZEAU ; DALE MILLER ; CATUSCIA PALAMIDESSI.** Preserving Differential Privacy under Finite-Precision Semantics. *ELECTRONIC PROCEEDINGS IN THEORETICAL COMPUTER SCIENCE,* 11 June 2013, vol. 117, 1-18
- **CYNTHIA DWORK.** A Firm Foundation for Private Data Analysis. *COMMUNICATIONS OF THE ACM,* 01 January 2011, vol. 54 (1), 86-95